# EUROPEAN PATENT SPECIFICATION

(11) **EP 1 444 926 B1**
(45) Date of publication and mention of the grant of the patent: **10.12.2008**
(21) Application number: 04075403.8
(22) Date of filing: 09.02.2004
(51) Int. Cl.: A47C 31/02, A47C 7/18, B64D 11/06

(54) **Seat cushion, and seat apparatus provided with such a seat cushion**
Sitzkissen und Sitzanordnung mit einem derartigen Sitzkissen
Coussin de siège et ensemble de siège pourvu d'un tel coussin

(30) Priority: 10.02.2003 NL 1022632
(43) Date of publication of application: 11.08.2004
(73) Proprietor: Recticel Nederland B.V., 4041 CL Kesteren (NL)
(72) Inventor: Lievestro, Robert, 6662 CC Elst (NL); Heijs, Johan Willem Herman, 2165 VD Lisserbroek (NL)
(74) Representative: Prins, Adrianus Willem

(56) References cited:
- FR-A- 2 462 129
- GB-A- 1 479 819
- US-A- 5 405 178
- US-A- 5 632 053

## Description

The invention relates to a seat cushion, in particular for an aircraft seat.

GB 1 479 819 discloses a seat that comprises a squab, e.g. backrest, headrest, elbow rest or cushion, formed by a resilient, foamed cushion pad moulded within a cover to be adhered thereto except in a peripheral region overlying a recess in the sides of the pad and substantially parallel to the bottom of the recess. The free edges of the peripheral region have a hem enclosing a resilient wire which is retained in a channel in a backing secured to a seat frame.

US patent 5,632,053 describes an aircraft seat, provided with a seat cushion with two foam bodies provided on top of each other which are detachably connected to each other. The seat cushion is further provided with a covering which is detachably connectable to the lower of the foam bodies. An advantage of this seat cushion is that its upper part, which relatively rapidly wears and soils under the influence of use, can be removed from another part of the seat cushion and from the seat for the purpose of replacement, recycling and/or a separate cleaning.

A disadvantage of this seat cushion is that the covering is found to crease or wrinkle easily during use. Thus, this seat is relatively uncomfortable and relatively little durable. In addition, the replacement of the upper foam body costs relatively much time, since, for this purpose, each time, the covering needs to be detached before this foam body can be removed.

The invention contemplates obviating these drawbacks. In particular, the invention contemplates a seat cushion which is comfortable and durable.

For this purpose, the seat cushion according to the invention is characterized by the measures of claim 1.

In the seat cushion according to the invention, creasing is avoided in a surprisingly simple manner in that the covering is fixedly connected to the first foam body. In addition, the advantage is preserved that the upper part of the seat cushion can easily be separated from another part. In this case, for this purpose, the covering and the first foam body are, moreover, easily detached from the second foam body together. Replacing the upper seat cushion part by a new upper part can thus be done relatively rapidly, which is particularly advantageous when a large number of seat cushions is to be replaced and/or cleaned. It was found that, in this manner, replacement can be carried out considerably more rapidly than with the seat cushion known from US 5,632,053.

According to the invention, at least a part of the seat cushion comprises relatively lightweight, fire-retardant foam material, wherein the said fire-retardant foam material is received in a cavity between said first and second foam body.

According to a preferred embodiment, at least a part of the seat cushion comprises a lightweight, fire-retardant foam material. This allows the seat cushion to have a lightweight design, which is advantageous for, for instance, use in aircraft.

Further elaborations of the invention are described in the subclaims. The invention will now be clarified on the basis of an exemplary embodiment and with reference to the drawing, in which:
Fig. 1 shows a cross-sectional view of an example of a seat cushion;
Fig. 2 shows a similar view to Fig. 1, in which the lower cushion part is not shown;
Fig. 3 shows a side elevational view of the upper cushion part of the exemplary embodiment shown in Fig. 1;
Fig. 4 shows a side elevational view of the lower cushion part of the example shown in Fig. 1;
Fig. 5 shows a bottom view of the side elevational view shown in Fig. 2; and
Fig. 6 shows an exemplary embodiment of the invention.

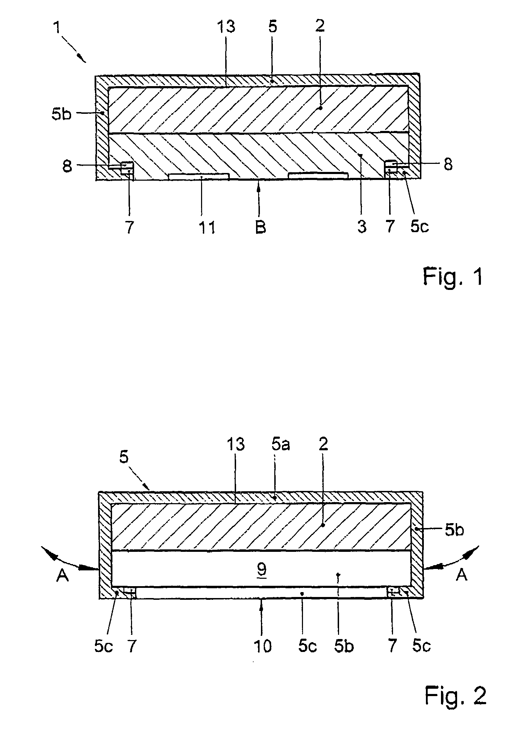

The embodiment shown diagrammatically in Figs. 1-5 of a seat cushion 1 comprises an upper cushion part 2, 5 and a lower cushion part 3. The upper cushion part comprises an upper foam body 2 and a cover 5. The lower cushion part comprises a lower foam body 3. In the assembled condition shown in Fig. 1 of the exemplary embodiment, the lower foam body 3 extends below the upper foam body 2. As Fig. 1 clearly shows, the foam bodies 2, 3 are formed such that the sides of the foam bodies facing each other substantially completely contact each other. The lower foam body 3 extends below the upper foam body 2 such that a bottom side of the upper foam body 2 is substantially completely supported by the lower foam body 3. Thus, there is no cavity between the sides facing each other of the various foam bodies 2, 3. The seat cushion 1 is thus, in the condition assembled from the foam bodies 2, 3, substantially completely filled with foam material.

As Fig. 2 shows, an upper part 5a of the covering 5 extends over a top side of the upper foam body 2. The upper covering part 5a is integrally connected to the upper foam body, for instance by a glue connection or the like. Preferably, the upper covering part 5a and the top side of the upper foam body 2 are connected to each other along substantially the whole contact surface 13. The covering 5 is also provided with side flaps 5b extending from this covering top side 5a to lower covering strips or flaps 5c. The covering side flaps 5b, the covering strips 5c and a bottom side of the upper foam body 2 bound an inner space 9 in which the second foam body 3 is receivable. Via an opening 10 provided between the lower covering strips 5c, this space 9 is accessible for providing and removing the lower foam body 3. Preferably, at least the side flaps 5b and lower strips 5c of the covering are manufactured from such material, for instance provided with a slightly flexible material, that these covering parts 5b, 5c can be pulled apart, in particular can be folded or rolled up, to facilitate the access to the inner space 9. In Fig. 2, such a movement of the covering is shown by arrows A.

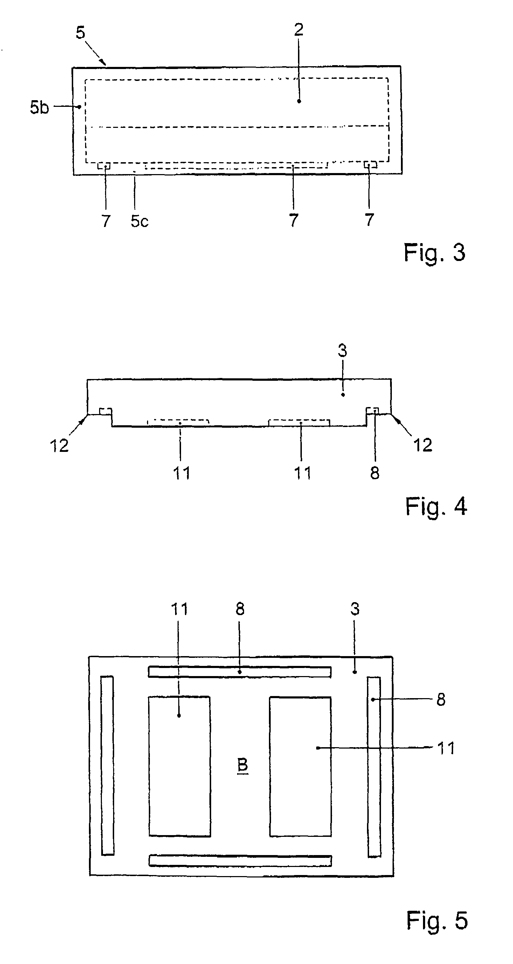

The lower strips 5c of the covering 5 are provided with detachable connecting means 7, for instance Velcro or the like, to detachably connect the upper cushion part 2, 5 to respective first connecting means 8 of the lower foam body 3. As Fig. 5 shows, at the bottom side B, near the bottom edges, the lower foam body 3 is provided with any number of strips, in this specific case four strips, of such connecting means 8. At the bottom side B, the lower foam body 3 is further provided with second detachable connecting means 11 to detachably couple the cushion 1 to a seat apparatus, for instance a chair or a couch. Naturally, the cushion 1 can also be placed loosely on a seat apparatus during use, such second connecting means 11 being redundant.

Preferably, the covering 5 is provided with a fire-retardant material, so that the cushion cannot easily catch fire. The covering 5 may further comprise strengthening material, for instance glass fiber, laminate or the like.

During use, the cushion can simply be placed on a chair, couch or the like, so that a user can then be comfortably supported by the cushion 1. Because the covering 5 is integrally connected to the top side of the upper foam body 2, the chance of undesired wrinkling and/or creasing in the upper part 5a of the covering 5 is considerably reduced. In addition, this prevents wear of the upper cushion part. Thus, the comfort of the cushion 1 is considerably higher compared to cushions known from practice, whose covering is completely loose with respect to the upper foam body.

When the upper cushion part 2, 5 is to be replaced, the covering 5 is simply detached from the lower foam body 3. Here, side flaps 5b may, for instance, be swung outwards in direction A. Covering 5 and the upper foam body 2 can then be removed from the lower cushion part 3 in one go. In addition, the lower cushion part 3 can easily maintain its position, for instance on the seat apparatus, while a new, clean upper cushion part can rapidly be provided on this lower cushion part 3. Because the covering 5 is connected to the lower foam body 3 near the bottom edges 12 of this body 3, this connection can easily be reached from the outside to be detached and attached.

Although this is not shown in the drawing, it is further advantageous if the second, at least the lower foam body 3 is also provided with a covering. This covering then preferably extends at least along the bottom side B of this foam body 3. Preferably, this covering of the second foam body is also provided with fire-retardant material and/or glass fiber. The detachable connections 8, 11 of the second foam body 3 may, for instance, easily be provided on the outside of this covering.

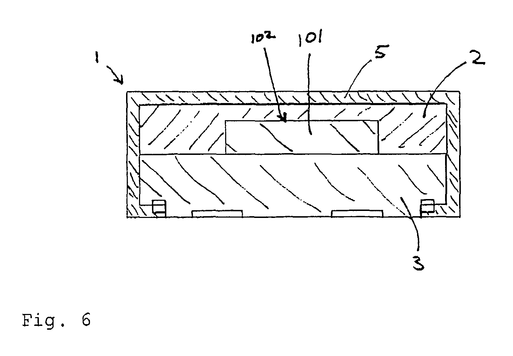

The exemplary embodiment shown in Fig. 6 differs from the above-described exemplary embodiment in that the seat cushion 1 is provided with a lightweight, fire-retardant foam material 101. As Fig. 6 shows, in particular, the seat cushion 1 comprises a third, lightweight foam body 101 of fire-retardant material, which third foam body 101 is received in a cavity 102 between the first and second foam body 2, 3, such that this cavity 102 is completely filled by the third foam body 101. As Fig. 6 clearly shows, the lower foam body 3 extends below the upper foam body 2 and the third foam body 101 such that the joint bottom side of the upper foam body 2 and the third foam body 101 is substantially completely supported by the lower foam body 3. The foam bodies 2, 3, 101 are formed such that the various sides facing each other of the foam bodies substantially completely contact each other. Thus, in the condition assembled from the foam bodies 2, 3, 101, the present seat cushion 1 is substantially filled with foam material, just like in the exemplary embodiment of Fig. 1. In the exemplary embodiment of Fig. 6, the cavity 102 is provided in the first foam body 2. However, such a cavity 102 may also extend in other places in the seat cushion 1, for instance also or only in the second foam body 3.

The lightweight foam body 101 preferably has a lower average density than the first foam body 2 and the second foam body 3. As a result, the seat cushion 1 shown in Fig. 6 has a lower mass than the embodiment shown in Fig. 1, which makes the embodiment of Fig. 6 more suitable for use in, for instance, aircraft. The fire-retardant foam material of the third foam body 101 has, in particular, an average density lower than approximately 0.1 gram/cm³, more in particular lower than approximately 0.02 gram/cm³. In addition, it is advantageous to use melamine foam as fire-retardant foam material. Melamine foam, which is generally known and available and is, for instance, available from BASF under the name of Basotect®, has good fire-resistant properties and can have a particularly light design.

The embodiment shown in Fig. 6 can relatively simply be assembled and mounted. The third foam part 101 can easily be placed in the cavity 102 intended for this purpose when the first and second foam body 2, 3 have been brought in a position moved away from each other, after which the first and second foam body 2, 3 are coupled to each other and receive the fire-retardant foam part 101 between them. Here, the third, lightweight foam body 101 may, for instance, be received loosely or fixedly in the cavity 102 between the first and second foam body 2, 3.

Needless to say, the invention is not limited to the exemplary embodiment described. Various modifications are possible within the scope of the invention as set forth in the following claims.

For instance, the seat cushion or cushion 1 may be designed in various forms. For instance, the first seat cushion part and/or the second seat cushion part may be provided with straight, inclined and/or bent surfaces.

Further, the covering 5 may be built up from one or more covering layers and/or contain various materials. This cover 5 may, for instance, also comprise a foam layer.

In addition, each of the detachable connecting means may be designed in various manners and comprise, for instance, click, button, hook, Velcro, elastic connections and/or the like.

In addition, the seat cushion may, for instance, be used in various types of seat apparatuses, for instance chairs, couches and/or armchairs, and for, for instance, seat apparatuses in aircraft, vessels and/or vehicles, in particular trains, automobiles and the like.

Further, the first foam body 2, second foam body 3 and/or the covering 5 may in themselves contain lightweight, preferably fire -retardant foam material. Such fire-retardant foam material may, for instance, comprise a synthetic foam, provided with one or more fire-retardant substances, melamine foam or the like.

## Claims

1. A seat cushion, in particular for an aircraft seat, provided with:
- a first foam body (2);
- a second foam body (3) extending below the first foam body (2);
- detachable connecting means (7, 8) to connect the first foam body (2) to the second foam body (3);
wherein the first foam body is provided with a covering (5) which is fixedly connected to this first foam body (2), **characterized in that**
the seat cushion comprises a third, lightweight foam body (101) of fire-retardant material, wherein the third foam body (101) is received in a cavity (102) between said first (2) and second foam body (3).

2. A seat cushion according to claim 1, wherein the covering (5) is connected to at least an upper surface (13) of the first foam body (2).

3. A seat cushion according to claim 1 or 2, wherein the covering (5) is glued to the first foam body (2).

4. A seat cushion according to any one of the preceding claims, wherein the first and second foam body are detachably connected to each other by Velcro connections.

5. A seat cushion according to any one of the preceding claims, wherein the covering (5) comprises a fire-retardant material.

6. A seat cushion according to any one of the preceding claims, wherein the said covering (5) comprises glass fiber.

7. A seat cushion according to any one of the preceding claims, wherein the second foam body (3) is also provided with a covering, wherein the covering of the second foam body preferably comprises a fire-retardant material, wherein the covering of the second foam body preferably comprises glass fiber.

8. A seat cushion according to any one of the preceding claims, wherein the seat cushion is arranged to be detachably placed on a seat apparatus, in particular a seat and/or couch.

9. A seat cushion according to any one of the preceding claims, wherein the covering (5) is provided with at least a part (7) of the said detachable connecting means (7, 8).

10. A seat cushion according to claim 9, wherein the first and second foam body (2, 3) are detachably connectable to each other only via the covering (5).

11. A seat cushion according to at least claim 9, wherein the second foam body (3) is arranged, near respective bottom edges (12), to be detachably connected to the covering.

12. A seat cushion according to any one of the preceding claims, wherein the covering (5) is provided with an upper covering part (5a), a lower covering part (5c) extending opposite it, and side flaps (5b) extending between the upper (5a) and lower covering part (5c).

13. A seat cushion according to any one of the preceding claims, wherein the covering (5) and the upper foam body (2) bound an inner space (9) in which the second foam body (3) is receivable.

14. A seat cushion according to claim 13, wherein the lower covering part (5c) is provided with an opening (10) offering access to the said inner space (9).

15. A seat cushion according to any of the preceding claims, wherein said fire-retardant foam material of the third foam body (101) has an average density which is lower than approximately 0.1 gram/cm³, more in particular lower than approximately 0.02 gram/cm³.

16. A seat cushion according to any of the preceding claims, wherein said fire-retardant foam material comprises melamine foam.

17. The seat cushion according to any of the preceding claims, wherein the third foam body (101) is received in the cavity (102) between the first and second foam body (2, 3), such that this cavity (102) is completely filled by the third foam body (101).

18. The seat cushion according to claim 17, wherein the first, second and third foam body (2, 3, 101) are formed such that the various sides facing each other of the foam bodies (2, 3, 101) substantially completely contact each other, such that in the condition assembled from the foam bodies (2, 3, 101), the seat cushion (1) is substantially filled with foam material.

19. The seat cushion according to any of the preceding claims, wherein the lightweight foam body (101) has a lower average density than the first foam body (2) and the second foam body (3).

20. Method to assemble and mount the cushion according to any of the preceding claims, wherein the third foam body (101) is placed in the cavity (102) intended for this purpose when the first and second foam body (2, 3) have been brought in a position moved away from each other, after which the first and second foam body (2, 3) are coupled to each other and receive the fire-retardant foam part (101) between them.

21. A seat apparatus, in particular a chair and/or couch, more in particular an aircraft seat, provided with a seat cushion according to any one of the preceding claims 1-19.

22. A vehicle, vessel and/or aircraft, provided with a seat apparatus according to at least claim 21.

## Patentansprüche

1. Sitzkissen, insbesondere für einen Flugzeugsitz, versehen mit:
- einem ersten Schaumstoffkörper (2);
- einem zweiten Schaumstoffkörper (3), welcher sich unter dem ersten Schaumstoffkörper (2) erstreckt;
- lösbare Verbindungsmittel (7, 8), um den ersten Schaumstoffkörper (2) mit dem zweiten Schaumstoffkörper (3) zu verbinden;
wobei der erste Schaumstoffkörper mit einer Abdeckung (5) versehen ist, welche fest mit diesem ersten Schaumstoffkörper (2) verbunden ist,
**dadurch gekennzeichnet,**
**dass** das Sitzkissen einen dritten, leichtgewichtigen Schaumstoffkörper (101) aus einem Feuer hemmenden Material umfasst, wobei der dritte Schaumstoffkörper (101) in einem Hohlraum (102) zwischen dem ersten (2) und dem zweiten Schaumstoffkörper (3) aufgenommen ist.

2. Sitzkissen nach Anspruch 1, wobei die Abdeckung zumindest mit einer oberen Oberfläche (13) des ersten Schaumstoffkörpers (2) verbunden ist.

3. Sitzkissen nach Anspruch 1 oder 2, wobei die Abdeckung (5) an den ersten Schaumstoffkörper (2) angeklebt ist.

4. Sitzkissen nach einem der vorhergehenden Ansprüche, wobei der erste und der zweite Schaumstoffkörper lösbar miteinander durch Klettverschlussverbindungen verbunden sind.

5. Sitzkissen nach einem der vorhergehenden Ansprüche, wobei die Abdeckung (5) ein Feuer hemmendes Material umfasst.

6. Sitzkissen nach einem der vorhergehenden Ansprüche, wobei die Abdeckung (5) einen Glasfaserstoff umfasst.

7. Sitzkissen nach einem der vorhergehenden Ansprüche, wobei der zweite Schaumstoffkörper (3) auch mit einer Abdeckung versehen ist, wobei die Abdeckung des zweiten Schaumstoffkörpers vorzugsweise ein Feuer hemmendes Material umfasst, wobei die Abdeckung des zweiten Schaumstoffkörpers vorzugsweise einen Glasfaserstoff umfasst.

8. Sitzkissen nach einem der vorhergehenden Ansprüche, wobei das Sitzkissen derart ausgestaltet ist, dass es lösbar auf einer Sitzvorrichtung, insbesondere auf einem Sitz und/oder einer Couch, angeordnet ist.

9. Sitzkissen nach einem der vorhergehenden Ansprüche, wobei die Abdeckung (5) zumindest mit einem Teil (7) der lösbaren Verbindungsmittel (7, 8) versehen ist.

10. Sitzkissen nach Anspruch 9, wobei der erste und der zweite Schaumstoffkörper (2, 3) nur über die Abdeckung (5) lösbar miteinander verbindbar sind.

11. Sitzkissen nach zumindest Anspruch 9, wobei der zweite Schaumstoffkörper (3) derart in der Nähe entsprechender Bodenkanten (12) ausgestaltet ist, dass er lösbar mit der Abdeckung verbunden ist.

12. Sitzkissen nach einem der vorhergehenden Ansprüche, wobei die Abdeckung (5) mit einem oberen Abdeckteil (5a), einem unteren Abdeckteil (5c), welches sich gegenüber davon erstreckt, und Seitenlaschen (5b), welche sich zwischen dem oberen (5a) und dem unteren Abdeckteil (5c) erstrecken, versehen ist.

13. Sitzkissen nach einem der vorhergehenden Ansprüche, wobei die Abdeckung (5) und der obere Schaumstoffkörper (2) an einen Innenraum (9) angrenzen, in welchen der zweite Schaumstoffkörper (3) aufnehmbar ist.

14. Sitzkissen nach Anspruch 13, wobei das untere Abdeckteil (5c) mit einer Öffnung (10) versehen ist, welche einen Zugang zu dem Innenraum (9) bietet.

15. Sitzkissen nach einem der vorhergehenden Ansprüche, wobei das Feuer hemmende Schaumstoffmaterial des dritten Schaumstoffkörpers (101) eine mittlere Dichte aufweist, welche geringer als ungefähr 0,1 g/cm³, insbesondere geringer als ungefähr 0,02 g/cm³ ist.

16. Sitzkissen nach einem der vorhergehenden Ansprüche, wobei das Feuer hemmende Schaumstoffmaterial einen Melamin-Schaumstoff umfasst.

17. Sitzkissen nach einem der vorhergehenden Ansprüche, wobei der dritte Schaumstoffkörper (101) in den Hohlraum (102) zwischen dem ersten und dem zweiten Schaumstoffkörper (2, 3) aufgenommen ist, so dass dieser Hohlraum (102) vollständig von dem dritten Schaumstoffkörper (101) gefüllt ist.

18. Sitzkissen nach Anspruch 17, wobei der erste, der zweite und der dritte Schaumstoffkörper (2, 3, 101) derart ausgebildet sind, dass sich die verschiedenen Seiten, welche jeweils den anderen Schaumstoffkörpern (2, 3, 101) gegenüberliegen, im Wesentlichen vollständig berühren, so dass in dem Zustand, in welchem das Sitzkissen mit den Schaumstoffkörpern (2, 3, 101) montiert ist, das Sitzkissen (1) vollständig mit einem Schaumstoffmaterial gefüllt ist.

19. Sitzkissen nach einem der vorhergehenden Ansprüche, wobei der leichtgewichtige Schaumstoffkörper (101) eine geringere mittlere Dichte als der erste Schaumstoffkörper (2) und der zweite Schaumstoffkörper (3) aufweist.

20. Verfahren, um das Kissen nach einem der vorhergehenden Ansprüche zusammenzubauen und zu montieren, wobei der dritte Schaumstoffkörper (101) in dem Hohlraum (102) zu dem Zweck angeordnet wird, dass, wenn der erste und der zweite Schaumstoffkörper (2, 3) in eine Stellung gebracht worden sind, in welcher sie voneinander weg versetzt sind, der erste und der zweite Schaumstoffkörper (2, 3) anschließend miteinander gekoppelt sind und den Feuer hemmenden Schaumstoffteil (101) zwischen sich aufnehmen.

21. Sitzvorrichtung, insbesondere ein Stuhl und/oder eine Couch, besser ein Flugzeugsitz, versehen mit einem Sitzkissen nach einem der vorhergehenden Ansprüche 1-19.

22. Fahrzeug, Schiff und/oder Flugzeug, versehen mit einer Sitzvorrichtung nach zumindest Anspruch 21.

## Revendications

1. Coussin de siège, en particulier pour un siège d'avion, comprenant de
► un premier corps en mousse (2) ;
► un deuxième corps en mousse (3) s'étendant sous le premier corps en mousse (2) ;
► des systèmes de fixation détachables (7,8) pour relier le premier corps en mousse (2) au deuxième corps en mousse (3) ;
dans lequel le premier corps en mousse est doté d'un revêtement (5) qui est raccordé de manière fixe à ce premier corps en mousse (2), **caractérisé en ce que** le coussin de siège comprend un troisième corps en mousse léger (101) en matériau ignifuge, dans lequel le troisième corps en mousse (101) est reçu dans une cavité (102) ménagée entre ledit premier (2) et ledit deuxième corps en mousse (3).

2. Coussin de siège selon la revendication 1, dans lequel le revêtement (5) est fixé à au moins une surface supérieure (13) du premier corps en mousse (2).

3. Coussin de siège selon la revendication 1 ou 2, dans lequel le revêtement (5) est collé au premier corps en mousse (2).

4. Coussin de siège selon l'une quelconque des revendications précédentes, dans lequel le premier et le deuxième corps en mousse sont fixés de manière détachable l'un à l'autre par des fixations Velcro.

5. Coussin de siège selon l'une quelconque des revendications précédentes, dans lequel le revêtement (5) comprend un matériau ignifuge.

6. Coussin de siège selon l'une quelconque des revendications précédentes, dans lequel ledit revêtement (5) comprend de la fibre de verre.

7. Coussin de siège selon l'une quelconque des revendications précédentes, dans lequel ledit deuxième corps en mousse (3) est également doté d'un revêtement, dans lequel ledit revêtement du deuxième corps en mousse comprend de préférence un matériau ignifuge, dans lequel le revêtement du deuxième corps en mousse comprend de préférence de la fibre de verre.

8. Coussin de siège selon l'une quelconque des revendications précédentes, dans lequel le coussin de siège est disposé de façon à être placé de manière détachable sur un ensemble de siège, en particulier un siège et/ou une couchette.

9. Coussin de siège selon l'une quelconque des revendications précédentes, dans lequel le revêtement (5) est doté d'au moins une partie (7) dudit système de fixation détachable (7,8).

10. Coussin de siège selon la revendication 9, dans lequel le premier et le deuxième corps en mousse (2, 3) peuvent être fixés de manière détachable l'un à l'autre, uniquement par le biais d'un revêtement (5).

11. Coussin de siège selon au moins la revendication 9, dans lequel le deuxième corps en mousse (3) est disposé, près des bords inférieurs respectifs (12), de façon à être reliés de manière détachable au revêtement.

12. Coussin de siège selon l'une quelconque des revendications précédentes, dans lequel le revêtement (5) est doté d'une partie de revêtement supérieure (5a), d'une partie de revêtement inférieure (5c) s'étendant à l'opposé de celle-ci, et de pattes latérales (5b) s'étendant entre la partie de revêtement supérieure (5a) et inférieure (5c).

13. Coussin de siège selon l'une quelconque des revendications précédentes, dans lequel le revêtement (5) et le corps en mousse supérieur (2) délimitent un espace interne (9) dans lequel le deuxième corps en mousse (3) peut être reçu.

14. Coussin de siège selon la revendication 13, dans lequel la partie de revêtement inférieure (5c) est dotée d'une ouverture (10) offrant un accès audit espace interne (9).

15. Coussin de siège selon l'une quelconque des revendications précédentes, dans lequel ledit matériau en mousse ignifuge du troisième corps en mousse (101) a une densité moyenne qui est inférieure à approximativement 0,1 gramme/cm³, plus particulièrement inférieure à approximativement 0,02 gramme/cm³.

16. Coussin de siège selon l'une quelconque des revendications précédentes, dans lequel ledit matériau en mousse ignifuge comprend de la mousse de mélamine.

17. Coussin de siège selon l'une quelconque des revendications précédentes, dans lequel le troisième corps en mousse (101) est reçu dans la cavité (102) ménagée entre le premier et le deuxième corps en mousse (2, 3), de sorte que cette cavité (102) soit totalement remplie par le troisième corps en mousse (101).

18. Coussin de siège selon la revendication 17, dans lequel le premier, le deuxième et le troisième corps en mousse (2, 3, 101) sont formés de sorte que les différents côtés se faisant face des corps en mousse (2, 3, 101) entrent sensiblement totalement en contact les uns avec les autres, de sorte que lorsque les corps en mousse (2, 3, 101) sont assemblés, le coussin de siège (1) soit sensiblement rempli de matériau en mousse.

19. Coussin de siège selon l'une quelconque des revendications précédentes, dans lequel le corps en mousse léger (101) a une densité moyenne inférieure au premier corps en mousse (2) et au deuxième corps en mousse (3).

20. Méthode d'assemblage et de montage du coussin selon l'une quelconque des revendications précédentes, dans laquelle le troisième corps en mousse (101) est placé dans la cavité (102) prévue dans ce but, quand le premier et le deuxième corps en mousse (2, 3) ont été placés dans une position éloignée l'un de l'autre, après quoi le premier et le deuxième corps en mousse (2, 3) sont reliés l'un à l'autre et reçoivent la partie en mousse ignifuge (101) entre eux.

21. Ensemble de siège, en particulier une chaise et/ou une couchette, plus particulièrement un siège d'avion, doté d'un coussin de siège selon l'une quelconque des revendications précédentes 1-19.

22. Véhicule, vaisseau et/ou avion doté d'un ensemble de siège selon au moins la revendication 21.
